(19) Europäisches Patentamt / European Patent Office / Office européen des brevets

(11) **EP 1 797 351 B1**

(12) **EUROPÄISCHE PATENTSCHRIFT**

| | |
|---|---|
| (45) Veröffentlichungstag und Bekanntmachung des Hinweises auf die Patenterteilung:<br>**17.09.2008 Patentblatt 2008/38** | (51) Int Cl.:<br>**F16H 35/02** *(2006.01)*     **F16H 7/02** *(2006.01)*<br>**F02B 67/06** *(2006.01)* |
| (21) Anmeldenummer: **05789880.1** | (86) Internationale Anmeldenummer:<br>**PCT/EP2005/009764** |
| (22) Anmeldetag: **10.09.2005** | (87) Internationale Veröffentlichungsnummer:<br>**WO 2006/037427 (13.04.2006 Gazette 2006/15)** |

(54) **UNRUNDE ROTATIONSSCHEIBE FÜR EINEN STEUERTRIEB**

OUT-OF-ROUND ROTATION DISC FOR A TIMING DRIVE

DISQUE ROTATIF NON CIRCULAIRE POUR UNE TRANSMISSION DE COMMANDE

| | |
|---|---|
| (84) Benannte Vertragsstaaten:<br>**CZ DE FR GB IT** | (72) Erfinder:<br>• **KELM, Peter**<br>  **91074 Herzogenaurach (DE)**<br>• **MOOSMANN, Andreas**<br>  **90471 Nürnberg (DE)**<br>• **RETTIG, Frank**<br>  **91074 Herzogenaurach (DE)** |
| (30) Priorität: **06.10.2004 DE 102004048629**<br>          **05.01.2005 US 29577** | |
| (43) Veröffentlichungstag der Anmeldung:<br>**20.06.2007 Patentblatt 2007/25** | (56) Entgegenhaltungen:<br>**EP-A- 1 227 056**      **DE-A1- 2 303 453**<br>**DE-A1- 10 009 808**    **DE-U1- 20 319 172** |
| (73) Patentinhaber: **Schaeffler KG**<br>  **91074 Herzogenaurach (DE)** | |

## Beschreibung

### Gebiet der Erfindung

Die Erfindung betrifft eine unrunde bzw. nicht kreisförmige Rotationsscheibe für einen Steuertrieb und ein Verfahren zur Konstruktion und Auslegung einer der-artigen Rotationsscheibe entsprechend dem Oberbegriff der Ansprüche 1,5. Ferner betrifft die vorliegende Erfindung ein Computersystem zur Auslegung einer derartigen Rotationsscheibe.

### Hintergrund der Erfindung

Synchronantriebssysteme wie bspw. Systeme auf der Basis von Steuerriemen sind in Kraftfahrzeugen sowie in industriellen Anwendungen weit verbreitet. In Kraftfahrzeugen werden bspw. Steuerriemen bzw. -ketten zum Antrieb von Nockenwellen verwendet, die Motoreinlass- und -auslassventile öffnen und schließen. Auch andere Vorrichtungen, wie bspw. Wasser- und Kraftstoffpumpen können ebenfalls durch einen derartigen Riemen bzw. eine derartige Kette angetrieben werden.

An derartigen Umschlingungsgetrieben stellen sog. Trumschwingungen systemspezifische Effekte dar. Prinzipiell kann ein bei Umschlingungsgetrieben genutztes Zugmittel, wie bspw. eine Kette oder ein Riemen zu Transversal-, Longitudinal- und Torsionsschwingungen angeregt werden. Derartige Schwingungen des Zugmittels können den Betrieb eines gesamten Antriebssystems empfindlich stören. Ihr Auftreten führt zu Geräuschen und erhöhten Strukturbelastungen von Bauteilen des Antriebsystems durch dynamische Kraftspitzen, welche die Lebensdauer des Gesamtsystems verkürzen. Darüber hinaus können bspw. bei einem durch Transversalschwingungen erzeugten Anschlagen des Riementrums an benachbarten Teilen sowohl diese als auch der Riemen selbst beschädigt werden. Schon nach kurzer Zeit kann es so zu einem Ausfall des gesamten Antriebssystems kommen. Angeregt werden derartige Trumschwingungen durch ein ungleichförmig verlaufendes Antriebsmoment des Verbrennungsmotors. Dabei können zudem Schwankungen der Riemen- bzw. Kettenspannungen auftreten, die ebenfalls einen höheren Verschleiss und eine geringere Lebensdauer des Riemens bzw. der Kette verursachen können.

Es ist bekannt, in derartigen Antriebssystemen nicht kreisförmige bzw. unrunde Riemenscheiben vorzusehen, um zu versuchen, derartige Schwingungen zu vermeiden bzw. auszuschalten. Aus der DE-A 195 20 508 ist ein umlaufendes Riemenantriebssystem für ein Verbrennungsmotor bekannt, bei dem ein Steuerriemen um zwei angetriebene, mit einer Nockenwelle eines Motors gekoppelte Riemenscheiben und um eine Antriebsriemenscheibe läuft, die mit einer Kurbelwelle des Motors gekoppelt ist. Dabei wird vorgeschlagen, Torsionsschwingungen durch eine unrunde Riemenscheibe zu verringern, die als eine Nockenwellenriemenscheibe dargestellt wird.

In der Gebrauchsmusterschrift DE 203 19 172 wird eine nichtkreisförmige Rotationskomponente offengelegt, die aus einem Rotor mit mehreren am Umkreis des Rotors angeordneten Zähnen besteht, wobei jeder Zahn eine Krone besitzt und sich zwischen jedem Paar nebeneinanderliegender Zähne eine Vertiefung befindet und die Kronen der Zähne auf einem gekrümmten Umfang liegen, der den Umkreis des Rotors bildet. Dabei weist der Umkreis des Rotors ein nicht-kreisförmiges Profil mit mindestens zwei vorstehenden Bereichen auf, die sich mit zurückgezogenen Bereichen abwechseln. Der Abstand zwischen den Mittelpunkten der Krone eines jeden Paares nebeneinanderliegender Zähne und ferner das Profil der Vertiefungen zwischen jedem Paar nebeneinanderliegender Zähne ist im wesentlichen gleich. Der Abstand zwischen dem Mittelpunkt jeder Krone und der Achse des Rotors am Umkreis variiert, um das genannte nichtkreisförmige Profil zu erzielen.

Dabei wird die Auslegung unrunder Scheiben von formschlüssigen Zugmittelgetrieben zwar beschrieben, der beschriebene Ansatz enthält jedoch methodische Schwächen. So wird in der genannten Gebrauchsmusterschrift von einer Grundkontur in Form eines Polygons ausgegangen. Das bedeutet, dass eine mit Zähnen versehene unrunde Scheibe eine Umhüllungslinie aufweist, die durch ein Polygon angenähert wird. Aufgrund dieses Ansatzes wird in der weiteren Auslegung der Scheibe eine Sehnenlänge für Kettentriebe, und eine Bogenlänge für Zahnriementriebe verwendet. Ferner kommt es durch Schrägstellung der an der Scheibe angeordneten Zähnen zu einer stark deformierten Zahnkontur.

Die gattungsgemäße Druckschrift DE 23 03 453 A1 zeigt ein Verfahren zur Erzielung der Profilgeometrien eines Paares von Antriebszahnrad und angetriebenem Zahnrad, die mit einem gegebenen Mitte-Mitte-Abstand miteinander kämmen können und die jeweils eine Symmetrieachse besitzen, bei dem eine symmetrische Hälfte des Teilkreises des Antriebsrades durch eine Anzahl von Paaren von aufeinander folgen den, nicht kreisförmigen ersten Figuren bekannter Polargleichungen gebildet wird, von denen die Kurven eines jeden Paares unterschiedliche Polargleichungen und einen Verbindungspunkt bei einem gegebenen Winkel Q1 von der Zahnradsymmetrieachse, bei der t1 Null ist, aufweisen, bei dem das an getriebene Zahnrad zweite Teilkreiskurven besitzt, die den ersten Teilkreiskurven zugeordnet sind, und bei dem eine gegebene erste Teilkreiskurve und die zugeordnete zweite Teilkreiskurve ein gegebenes Geschwindigkeitsverhältnis besitzen, dadurch gekennzeichnet, dass erste Paare von Gleichungen aufgestellt werden, von denen die Gleichungen eines jeden Paares die Längen der Radien einer der ersten Teilkreiskurven bei Winkeln 1 und die Längen ihrer zugeordneten Teilkreisradien des angetriebenen Zahnrades ausdrücken und zwei verschiedene Konstante unbekannter Grösse enthalten, um zu gleichen Teilkreisumfängen und zu dem gegebenen Geschwindigkeitsverhältnis zu kommen, wobei die Konstanten in den Gleichungspaaren auch unterschiedlich voneinander sind, dass ein Paar zweiter Gleichungen aufgestellt werden, die die Winkelgeschwindigkeiten aufeinander folgender zweiter Teilkreiskurven eines jeden Paares an ihrer Verbindungsstelle ausdrücken, wobei die zweiten Gleichungen die Konstanten in den Längen ausdrücken der Radien der entsprechenden zweiten Teilkreiskurven enthalten, dass ein Paar von dritten Gleichungen aufgestellt wird, die die Neigungswinkel aufeinander folgender erster Teilkreiskurven eines jeden Paares an ihrer Verbindungsstelle ausdrücken, wobei die dritte Gleichung die Konstanten in den Langenausdrücken der Radien der entsprechenden ersten Teilkreiskurven aufweisen, dass eine vierte Gleichung aufgestellt wird, die das kombinierte Winkelausmaß der zweiten Teilkreiskurven, wobei die vierte Gleichung die Konstanten in den Längenausdrücken der Radien der entsprechenden ersten und zweiten Teilkreiskurven enthält, dass in einer fünften Gleichung das gegebene Geschwindigkeitsverhältnis durch die Radiusbeziehung der einen ersten teilkreis- kurve und der zugeordnetenzweiten Teilkreiskurve ausgedrückt wird, wobei die fünfte Gleichung die Konstanten in den Längenausdrücken der Radien der entsprechenden ersten und zweiten Teilkreiskurven aufweist, dass aus den zweiten bis fünften Gleichungen und durch Gleichsetzen der zweiten und dritten Gleichungen eines jeden Paares die numerischen Warte für alle Konstanten erhalten werden, und dass durch Auswertung der numerischen Werte der Konstanten in den ersten Paaren der Gleichungen die tatsächlichen Längen der Koordinatenteilkreisradien der Zahnräder für unterschiedliche Winkel 1 erhalten werden.

## Aufgabe der Erfindung

Es war nunmehr eine Aufgabe der vorliegenden Erfindung vor dem Hintergrund des zitierten Standes der Technik eine Rotationsscheibe und ein entsprechendes Verfahren zur Auslegung einer derartigen Rotationsscheibe bereitzustellen, um oben genannte Nachteile zu beheben.

## Zusammenfassung der Erfindung

Ausgehend von dem zitierten Stand der Technik und den daraus abzuleitenden Überlegungen stellt die vorliegende Erfindung eine unrunde Rotationsscheibe mit den Merkmalen des Patentanspruchs 1, ein Verfahren zur Auslegung iner derartigen Rotationsscheibe mit den Merkmalen des Patentanspruchs 5, ein Computerprogramm mit den Merkmalen des Patentanspruchs 8 und ein Com-putersystem mit den Merkmalen des Patentanspruchs 11 bereit.

Gemäß Patentanspruch 1 wird eine um einen Drehwinkel um eine Rotationsachse rotierbare Rotationsscheibe bereitgestellt, wobei die Rotationsscheibe einen mindestens eine Erhebung aufweisenden Rotationsscheibenumriss, eine vorgegebene Anzahl von an dem Rotationsscheibenumriss angeordneten Zähnen mit einem jeweiligen Mittelpunkt, wobei die Mittelpunkte jeweils benachbarter Zähne einen vorgegebenen Abstand haben, einen Rotationsscheibenradius, der funktional von dem Drehwinkel und einem mittleren Radius abhängt und eine sich daraus ergebende Rotationsscheibenumschlingungskurve aufweist, wobei der mittlere Radius so gewählt ist, dass eine umlaufende Bogenlänge der Rotationsscheibenumschlingungskurve gleich dem Produkt aus dem vorgegebenen Abstand der Mittelpunkte benachbarter Zähne und der Anzahl der Zähne ist.

Unrund bedeutet im Rahmen der vorliegenden Erfindung, dass der Radius der Scheibe nicht konstant ist, was mit einer ungleichförmigen Übersetzung einhergehen kann. Durch eine unrunde Rotationsscheibe kann ein Steuertrieb eine Anregung, d.h. eine Schwingungsanregung erfahren, die aus der Scheibenform, d.h. der nicht ideal runden Form, resultiert. Derart unrunde Rotationsscheiben können, wie bereits eingangs erwähnt, zur Tilgung von Drehschwingungen in Steuertriebsystemen eingesetzt werden. Ursachen derartiger Drehschwingungen können unter anderem in einem Verbrennungsprozess eines Motors oder in ungleichmäßigen Antriebsmomenten anderer Aggregate, wie bspw. Pumpen, liegen. Bei derartigen Systemen kommt einer korrekten Positionierung und Profilierung von Zähnen einer entsprechenden Rotationsscheibe große Bedeutung zu, um unnötige Belastungen eines eingesetzten Zugmittels, wie bspw. eines Riemens oder einer Kette, im Kontakt mit der Rotationsscheibe bzw. dem Rad zu vermeiden. Andernfalls wäre eine verkürzte Lebensdauer des Zugmittels die Folge.

Mittels des Einsatzes einer erfindungsgemäßen Rotationsscheibe kann das Schwingungsverhalten von Umschlingungstrieben, die als ungleichförmig übersetzende Getriebe ausgeführt sind, beruhigt werden. Beispiele hierfür befinden sich z. B. in den im Automobilbau verwendeten Steuer- und Aggregatetrieben. Die erfindungsgemäßen Rotationsscheiben sind jedoch anwendungsunabhängig einsetzbar, bspw. auch in Bereichen der Textil- oder Büromaschinen.

Bei der erfindungsgemäßen Rotationsscheibe ist die bei einer 360°-Drehung überstrichene Länge der sich aus dem Rotationsscheibenumriss ergebenden Rotationsscheibenumschlingungskurve gleich dem Umfang einer runden Scheibe, der sich als Produkt der vorgegebenen Anzahl Zähne und des vorgegebenen jeweiligen Abstands benachbarter Zähne ergibt, wobei zur Berechnung der Länge der Rotationsscheibenumschlingungskurve der von dem Drehwinkel und dem mittleren Radius abhängige Rotationsscheibenradius eingesetzt wird. Dabei ergibt sich ein spezifischer mittlerer Radius, der jedoch je nach funktionalem Ansatz für den Rotationsscheibenradius variieren kann. Dadurch wird erreicht, dass der Umfang der unrunden Rotationsscheibe in der Wirkebene exakt dem einer runden Scheibe entspricht. Die exakte Bestimmung des Umfangs bzw. der bei einer 360°-Drehung überstrichenen Länge der Rotationsscheibenumschlingungskurve ist von Bedeutung, da darüber in direkter Weise ein Übersetzungsverhältnis bestimmt wird und diese insofern funktionsrelevant ist. So muss bspw. in einem PKW-Steuertrieb die Übersetzung zwischen einer eingesetzten Kurbel- und einer entsprechend eingesetzten Nockenwelle exakt 2:1 sein.

In einer weiteren möglichen Ausführungsform der erfindungsgemäßen Rotationsscheibe ist der Rotationsscheibenradius durch eine harmonische Entwicklung der folgenden Form ausdrückbar:

$$r(t) = r_{mittel} + \sum_i \delta r_i \cos(n_i t + \varphi_i),$$

wobei dabei $r_{mittel}$ der mittlere Radius, $\delta r_i$ eine Unrundheitsamplitude, $n_i$ die Anzahl der Erhebungen des Rotationsscheibenumrisses, $\varphi i$ eine Phasenlage und t ein Laufparameter aus einem Intervall von 0 bis $2\pi$ entspricht. Der mittlere Radius ist dabei, wie bereits erwähnt, nicht konstant sondern variabel. Der mittlere Radius kann bspw. in Abhängigkeit der gewählten Anzahl der Erhebungen $n_i$, im folgenden auch als Ordnung bezeichnet, der Phasenlagen $\varphi_i$ oder auch der Unrundheitsampliduten $\delta r_i$ variieren. Die Rotationsumschlingungskurve als Raumkurve kann in Koordinatenform mittels des winkelabhängigen Radius wie folgt angegeben werden:

$$(x(t), y(t))=(r(t)\cos(t), r(t)\sin(t))$$

Der mittlere Radius läßt sich nunmehr bestimmen, indem eine bei einer 360°-Drehung überstrichene Bogenlänge der in Parameterform (x(t), y(t)) angegebenen Rotationsumschlingungskurve berechnet wird, nämlich durch Durchführung einer Integration des Bogenlängendifferentials über ein Intervall von 0 bis 2n, und die sich ergebende Bogenlänge mit dem Produkt aus der vorgegebenen Anzahl Z von Zähnen und dem vorgegebenen Abstand D jeweils benachbarter Zähne gleichgesetzt wird:

$$ZD= \int\limits_0^{2\pi} \sqrt{x'^2(t) + y'^2(t)}\, dt$$

Hierbei wird demnach eine Bogenlänge zwischen zwei Zähnen in Form des Rotationsscheibenumschlingungskurvenabschnittes anstelle der Sehnenlänge bzw. des Abstandes zweier Mittelpunkte benachbarter Zähne verwendet. Dieser Ansatz ist methodisch aufwendiger, führt jedoch bei zunehmenden Unrundheiten zu korrekten Ergebnissen. Hierbei sei angemerkt, dass bei Kettentrieben anstelle der Bogenlänge eine Sehnenlänge verwendet werden muss, da hier aufgrund der Starrheit der einzelnen Kettenglieder ein sogenannter Polygoneffekt einwirkt.

In einer weiteren denkbaren Ausführungsform der erfindungsgemäßen Rotationsscheibe sind die Zähne der Rotationsscheibe so ausgerichtet, dass ihre jeweilige Mittelinie senkrecht zur an dem jeweiligen Mittelpunkt der Zähne anliegenden Tangente der Rotationsscheibenumschlingungskurve steht. Eine derartige Ausrichtung der Zähne kann eine womöglich auftretende Belastung eines verwendeten Zugmittels erheblich reduzieren. Bei einer Ausrichtung von zwischen den Zähnen sich ergebenden Zahnlücken über ein Polygon, wird das Profil der Zähne verzerrt. Eine derartige Verzerrung beansprucht wiederum ein verwendetes Zugmittel. Einer dennoch verbleibenden Rest-Deformation ließe sich ggf. durch eine positions- und somit radiusabhängige Variation des Zahnprofils abhelfen.

In einer anderen Ausführungsform der erfindungsgemäßen Rotationsscheibe folgt ein von einem die Rotationsscheibe zumindest teilweise umschlingendes Zugmittel gebildeter Umschlingungsbogen stets der Rotationsscheibenumschlingungskurve. Das bedeutet, dass der von dem Zugmittel gebildete Umschlingungsbogen größtmögliche Auflage auf die Rotationsscheibe hat. Ferner bedeutet dies, dass die Rotationsscheibenumschlingungskurve stets eine nichtnegative Krümmung aufweist.

Ferner betrifft die vorliegende Erfindung ein Verfahren zur Auslegung mindestens einer um einen Drehwinkel um eine Drehachse rotierbare Rotationsscheibe für einen Steuertrieb, wobei die mindestens eine Rotationsscheibe einen mindestens eine Erhebung aufweisenden Rotationsscheibenumriss, eine vorgegebene Anzahl an dem Rotationsscheibenumriss angeordneter Zähne mit Mittelpunkten, wobei die Mittelpunkte jeweils benachbarter Zähne einen vorgegebenen Abstand haben, einen funktional von dem Drehwinkel und einem mittleren Radius abhängenden Rotationsscheibenradius und eine sich daraus ergebende Rotationsscheibenumschlingungskurve aufweist. Bei dem Verfahren wird dabei der mittlere Radius so bestimmt, dass eine umlaufende Bogenlänge der Rotationsscheibenumschlingungskurve gleich dem Produkt aus dem vorgegebenen Abstand der Mittelpunkte benachbarter Zähne und der vorgegebenen Anzahl der Zähne ist.

In einer möglichen Ausführungsform des einfundsgemäßen Verfahrens wird der Rotationsscheibenradius durch eine harmonische Entwicklung der folgenden Form bestimmt:

$$r(t) = r_{mittel} + \sum_i \delta r_i \cos(n_i t + \varphi_i)$$

wobei dabei $r_{mittel}$ dem mittleren Radius, $\delta r_i$ einer Unrundheitsamplitude, $n_i$ der Anzahl der Erhebungen, $\varphi_i$ einer Phasenlage und t einem Laufparameter aus einem Intervall von 0 bis $2\pi$ entspricht. Der mittlere Radius $r_{mittel}$ ist dabei variabel und wird jeweils für einen bestimmten Ansatz, das heißt für eine bestimmte Wahl der Anzahl der Erhebungen, das heißt der Ordnung, der Phasenlagen oder der Unrundheitsamplituden separat bestimmt.

Ferner ist es denkbar, die Zähne so auszurichten, dass ihre jeweilige Mittellinie senkrecht zur an dem jeweiligen Mittelpunkt der Zähne anliegenden Tangente der Rotationsscheibenumschlingungskurve steht.

Darüber hinaus ist es denkbar, den Rotationsscheibenumriss derart zu wählen, dass die sich daraus ergebende Rotationsscheibenumschlingungskurve stets eine nichtnegative Krümmung aufweist. Dadurch wird erreicht, dass ein die Rotationsscheibe umschlingendes Zugmittel größtmögliche Auflage auf der Rotationsscheibe hat.

Die vorliegende Erfindung betrifft darüber hinaus ein Erzeugnis zum Durchführen eines erfindungsgemäßen Verfahrens, wobei das Erzeugnis ein Computerprogramm mit Programmcode ist, der bei Ablauf des Computerprogramms auf einem Computer dazu geeignet ist, ein erfindungsgemäßes Verfahren durchzuführen. Das Computerprogramm kann dabei auf einem computerlesbaren Medium gespeichert sein.

Ferner wird ein computerlesbarer Datenträger mit einem darauf gespeicherten Computerprogramm bereitgestellt, das ein Programmcode umfasst, der bei Ablauf des Computerprogramms auf einem Computer dazu geeignet ist, ein erfindungsgemäßes Verfahren durchzuführen.

Darüber hinaus wird ein Computersystem mit einem Speichermittel vorgeschlagen, in dem ein Computerprogramm mit Programmcode gespeichert ist, der bei Ablauf des Computerprogramms auf einem Computer dazu geeignet ist, ein erfindungsgemäßes Verfahren durchzuführen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

## Kurze Beschreibung der Zeichnungen

Unter Bezugnahme auf die Zeichnung wird die Erfindung anhand eines Ausführungsbeispiels ausführlich beschrieben. Dabei zeigt

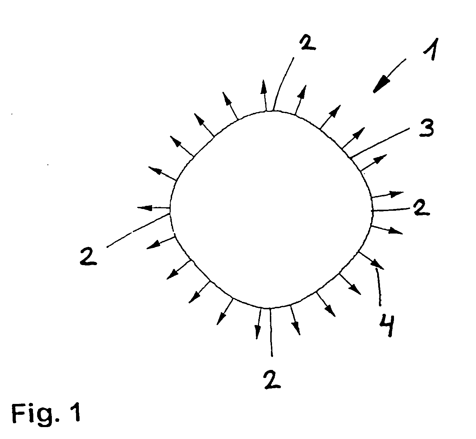

Figur 1    eine schematische Darstellung einer Ausführungsform einer erfindungsgemäßen Rotationsscheibe.

## Detaillierte Beschreibung der Zeichnungen

Figur 1 zeigt eine unrunde Rotationsscheibe 1. Die Rotationsscheibe 1 weist vier Erhebungen 2 auf. Darüber hinaus sind am Rotationsscheibenumriss 3 eine vorgegebene Anzahl Z von Zähnen 4 angeordnet. Im hier dargestellten Fall sind 21 Zähne am Rotationsscheibenumriss 3 vorgesehen. Es lässt sich dabei ein minimaler Durchmesser $d_{min}$ und ein maximaler Durchmesser $d_{max}$ bestimmen und daraus eine Durchmesserdifferenz $\Delta d$. Im vorliegenden Fall ist die Durchmesserdifferenz $\Delta d$ vorgegeben zu 5mm. Die Anzahl n der Erhebungen 2 entspricht der Ordnung, die hier somit 4 beträgt. Mittels dieser Angaben lässt sich nun eine Rotationsscheibenumschlingungskurve als Raumkurve in Form von (x(t), y(t)) in erster Näherung wie folgt angeben:

$$x(t) = r(t) \cos(t) = \left( r_{mittel} + \frac{\Delta d}{4} \cos(nt) \right) \cos(t)$$

$$y(t) = r(t)\sin(t) = (r_{mittel} + \frac{\Delta d}{4}\cos(nt))\sin(t)$$

wobei eine Phasenlage $\varphi_i$ von 0 angenommen wurde. Die Unrundheitsamplitude $\delta r$ ergibt sich als $\Delta d/4$. Ferner wurde ein Abstand D zwischen jeweils zwei Mittelpunkten benachbarter Zähne, eine sogenannte Teilung, vorgegeben zu 9,525mm.

Durch Integration des Differentials der Bogenlänge der Rotationsscheibenumschlingungskurve über ein Intervall von 0 bis 2n:

$$\int_0^{2\pi} \sqrt{x'^2(t) + y'^2(t)}\,dt$$

und Gleichsetzung mit dem Produkt aus der vorgegebenen Anzahl Z von Zähnen und der vorgegebenen Teilung D:

$$ZD = \int_0^{2\pi} \sqrt{x'^2(t) + y'^2(t)}\,dt$$

ergibt sich ein mittlerer Radius zu:

$$r_{mittel} = 31,6383$$

woraus sich dann die Scheibenkontur ergibt zu:

$$x(t) = (31,6383 + 1,25\cos(4t))\cos(t)$$
$$y(t) = (31,6383 + 1,25\cos(4t))\sin(t)$$
$$\text{für } t \in [0, 2\pi[$$

Man erkennt dabei, dass sich je nach gewähltem bzw. geeignetem funktionalen Ansatz des winkelabhängigen Radius ein anderer mittlerer Radius ergibt. Somit ist der mittlere Radius und damit gekoppelt der winkelabhängige Radius stets dem zugrundeliegenden System angepasst. Die jeweils sich ergebende Rotationsscheibenumschlingungskurve wird demnach sehr flexibel an bestehende Vorgaben angepasst. Die genaue Bestimmung des mittleren Radius bzw. der Länge der Rotationsscheibenumschlingungskurve als Abbild der unrunden Kontur der Rotationsscheibe ist sehr funktionsrelevant und steht in direkter Weise mit einem Übersetzungsverhältnis der Rotationsscheibe im Zusammenhang. So beispielweise muss eine Übersetzung zwischen einer Kurven- und einer Nockenwelle bei einem Pkw-Steuertrieb exakt 2:1 sein. Nur durch genaue Bestimmung des mittleren Radius bzw. der Rotationsscheibenumschlingungskurve kann man derartigen Vorgaben gerecht werden.

Ferner erfolgt eine Ausrichtung von Zähnen so, dass die Mittellinie eines Zahnes senkrecht zur Tangenten an der Rotationsscheibenumschlingungskurve steht. Eine geringe Rest-Deformation bleibt ggf. dennoch, welcher durch eine positions- und somit radiusabhängigen Variation des Zahnprofils abgeholfen werden könnte.

Darüber hinaus soll ein Zugmittel im Gesamtverlauf seines Umschlingungsbogens möglichst immer auf der Scheibe aufliegen. Das bedeutet, dass ein von einem die Rotationsscheibe zumindest teilweise umschlingendes Zugmittel gebildeter Umschlingungsbogen stets der Rotationsscheibenumschlingungskurve folgt. Dies ist gleichbedeutend mit der Forderung, dass die Rotationsscheibenumschlingungskurve stets eine nicht negative Krümmung aufweisen soll.

Bei Wahl der Parameter in dem gemachten harmonischen Ansatz ist diese Forderung stets zu berücksichtigen.

Die vorliegende Erfindung weist in allen Aspekten viele Anwendungsformen bei Vorrichtungen auf, die eine nicht-kreisförmige Rotationsscheibe erfordern, insbesondere findet sie Anwendung bei Synchronantriebsvorrichtungen. Dabei kann es sich beispielsweise um einen Verbrennungsmotor handeln. Die Erfindung ist jedoch auch in anderen Vorrichtungen als Synchronantriebsvorrichtungen anwendbar. Die unrunde bzw. nicht-kreisförmige Form der Rotationsscheibe kann an vielen verschiedenen Stellen in einer Antriebsvorrichtung vorgesehen werden. Die Wahl des Rotationsscheibenumrisses hängt von anderen Komponenten einer Antriebsvorrichtung ab. Dabei kann sich ein gleichmäßiges nicht-kreisförmiges Profil oder ein nicht-gleichmäßiges Profil bzw. Umriss für die Rotationsscheibe ergeben. Dabei müssen ein Zugmittel und die Rotationsscheibe aus Gründen der Leistung und Lebensdauer so gut wie möglich zueinander passen.

**Patentansprüche**

1. Rotationsscheibe, um einen Drehwinkel um eine Rotationsachse rotierbar, mit einem mindestens eine Erhebung aufweisenden Rotationsscheibenumriss, einer vorgegebenen Anzahl von an dem Rotationsscheibenumriss angeordneten Zähnen mit einem jeweiligen Mittelpunkt, wobei die Mittelpunkte jeweils benachbarter Zähne einen vorgegebenen Abstand haben, einem Rotationsscheibenradius, der funktional von dem Drehwinkel und einem mittleren Radius abhängt und einer sich daraus ergebenden Rotationsscheibenumschlingungskurve, wobei der mittlere Radius so gewählt ist, dass eine umlaufende Bogenlänge der Rotationsscheibenumschlingungskurve gleich dem Produkt aus dem vorgegebenen Abstand der Mittelpunkte benachbarter Zähne und der Anzahl der Zähne ist, **dadurch gekennzeichnet, dass**
der Rotationsscheibenradius durch eine harmonische Entwicklung der folgenden Form ausdrückbar ist:

$$r(t) = r_{mittel} + \sum_i \delta r_i \cos(n_i t + \varphi_i) \, ,$$

wobei hierin sind:
$r_{mittel}$ = mittlere Radius,
$\delta r_i$ = eine Unrundheitsamplitude,
$n_i$ = Anzahl der Erhebungen
$\varphi_i$ = eine Phasenlage, und
$t$ = ein Laufparameter aus einem Intervall von 0 bis 2n.

2. Rotationsscheibe nach Anspruch 1, bei der die Zähne so ausgerichtet sind, dass ihre jeweilige Mittellinie senkrecht zur an dem jeweiligen Mittelpunkt der Zähne anliegenden Tangente der Rotationsscheibenumschlingungskurve steht.

3. Rotationsscheibe nach einem der vorhergehenden Ansprüche, bei der ein von einem die Rotationsscheibe zumindest teilweise umschlingendes Zugmittel gebildeter Umschlingungsbogen stets der Rotationsscheibenumschlingungskurve folgt.

4. Rotationsscheibe nach einem der vorhergehenden Ansprüche, bei der die Rotationsscheibenumschlingungskurve stets eine nicht negative Krümmung aufweist.

5. Verfahren zur Auslegung mindestens einer um einen Drehwinkel um eine Drehachse rotierbaren Rotationsscheibe für einen Steuertrieb, wobei die mindestens eine Rotationsscheibe einen mindestens eine Erhebung aufweisenden Rotationsscheibenumriss, eine vorgegebene Anzahl von an dem Rotationsscheibenumriss angeordneten Zähnen mit Mittelpunkten, wobei die Mittelpunkte jeweils benachbarter Zähne einen vorgegebenen Abstand haben, einen funktional von dem Drehwinkel und einem mittleren Radius abhängenden Rotationsscheibenradius und eine sich daraus ergebende Rotationsscheibenumschlingungskurve aufweist, bei dem der mittlere Radius so bestimmt wird, dass eine umlaufende Bogenlänge der Rotationsscheibenumschlingungskurve gleich dem Produkt aus dem vorgegebenen Abstand der Mittelpunkte benachbarter Zähne und der Anzahl der Zähne ist, **dadurch gekennzeichnet, dass**
der Rotationsscheibenradius durch eine harmonische Entwicklung der folgenden Form bestimmt wird:

$$r(t) = r_{mittel} + \sum_i \delta r_i \cos(n_i t + \varphi_i) \, ,$$

wobei hierin sind:

$r_{mittel}$ = mittlere Radius,
$\delta r_i$ = eine Unrundheitsamplitude,
$n_i$ = Anzahl der Erhebungen
$\varphi_i$ = eine Phasenlage, und
t = ein Laufparameter aus einem Intervall von 0 bis 2n.

6. Verfahren nach Anspruch 6, bei dem die Zähne so ausgerichtet werden, dass ihre jeweilige Mittellinie senkrecht zur an dem jeweiligen Mittelpunkt der Zähne anliegenden Tangente der Rotationsscheibenumschlingungskurve steht.

7. Verfahren nach Anspruch 5 oder 6, bei dem der Rotationsscheibenumriss derart gewählt wird, dass die sich daraus ergebende Rotationsscheibenumschlingungskurve stets eine nicht negative Krümmung aufweist.

8. Erzeugnis zum Durchführen des Verfahrens nach einem der Ansprüche 5 bis 7, wobei das Erzeugnis ein Computerprogramm mit Programmcode ist, der bei Ablauf des Computerprogramms auf einem Computer dazu geeignet ist, ein Verfahren nach einem der Ansprüche 5 bis 7 durchzuführen.

9. Computerprogramm nach Anspruch 8, das auf einem computerlesbaren Medium gespeichert ist.

10. Computerlesbarer Datenträger mit einem darauf gespeicherten Computerprogramm, das einen Programmcode umfasst, der bei Ablauf des Computerprogramms auf einem Computer dazu geeignet ist, ein Verfahren nach einem der Ansprüche 5 bis 7 durchzuführen.

11. Computersystem mit einem Speichermittel, in dem ein Computerprogramm mit Programmcode gespeichert ist, der bei Ablauf des Computerprogramms auf einem Computer dazu geeignet ist, ein Verfahren nach einem der Ansprüche 5 bis 7 durchzuführen.

**Claims**

1. Rotary disc, rotatable by a rotational angle about a rotational axis, having a rotary disc outline which has at least one elevation, and having a predefined number of teeth which are arranged on the rotary disc outline and which have a respective central point, with the central points of in each case adjacent teeth having a predefined spacing, a rotary disc radius which is functionally dependent on the rotational angle and a mean radius, and a resulting rotary disc wrap curve, with the mean radius being selected such that an encircling curve length of the rotary disc wrap curve is equal to the product of the predefined spacing of the central points of adjacent teeth and the number of teeth, **characterized in that** the rotary disc radius can be expressed by a harmonic expansion of the following form:

$$r(t) = r_{mean} + \sum_i \delta r_i \cos(n_i t + \varphi_l)$$

where:
$r_{mean}$ = mean radius,
$\delta r_i$ = a non-circularity amplitude,
$n_i$ = number of elevations
$\varphi_l$ = a phase position, and
t = a running parameter from an interval from 0 to $2\pi$.

2. Rotary disc according to Claim 1, in which the teeth are aligned such that their respective central line is perpendicular to the tangent, which is incident on the respective central point of the teeth, of the rotary disc wrap curve.

3. Rotary disc according to one of the preceding claims, in which a wrap arc which is formed by a traction mechanism which is wrapped at least partially around the rotary disc always follows the rotary disc wrap curve.

4. Rotary disc according to one of the preceding claims, in which the rotary disc wrap curve always has a negative curvature.

**5.** Method for designing at least one rotary disc, rotatable by a rotational angle about a rotational axis, for a timing drive, with the at least one rotary disc having a rotary disc outline which has at least one elevation, and having a predefined number of teeth which are arranged on the rotary disc outline and which have central points, with the central points of in each case adjacent teeth having a predefined spacing, a rotary disc radius which is functionally dependent on the rotational angle and a mean radius, and a resulting rotary disc wrap curve, in which method the mean radius is determined such that an encircling curve length of the rotary disc wrap curve is equal to the product of the predefined spacing of the central points of adjacent teeth and the number of teeth, **characterized in that** the rotary disc radius is determined by a harmonic expansion of the following form:

$$r(t) = r_{mean} + \sum_i \delta r_i \cos(n_i t + \varphi_l)$$

where:
$r_{mean}$ = mean radius,
$\delta r_i$ = a non-circularity amplitude,
$n_i$ = number of elevations
$\varphi_l$ = a phase position, and
$t$ = a running parameter from an interval from 0 to $2\pi$.

**6.** Method according to Claim 6, in which the teeth are aligned such that their respective central line is perpendicular to the tangent, which is incident on the respective central point of the teeth, of the rotary disc wrap curve.

**7.** Method according to Claim 5 or 6, in which the rotary disc outline is selected such that the resulting rotary disc wrap curve always has a non-negative curvature.

**8.** Product for carrying out the method according to one of Claims 5 to 7, with the product being a computer program with program code which, when the computer program is executed on a computer, is suitable for carrying out a method according to one of Claims 5 to 7.

**9.** Computer program according to Claim 8, which computer program is stored on a computer-readable medium.

**10.** Computer-readable data carrier having a computer program stored thereon, which computer program comprises a program code which, when the computer program is executed on a computer, is suitable for carrying out a method according to one of Claims 5 to 7.

**11.** Computer system having a memory means in which is stored a computer program with program code which, when the computer program is executed on a computer, is suitable for carrying out a method according to one of Claims 5 to 7.

**Revendications**

**1.** Disque rotatif pouvant tourner selon un angle de rotation autour d'un axe de rotation, comprenant un contour de disque rotatif qui présente au moins un bossage, un nombre donné de dents disposées sur le contour du disque rotatif et ayant chacune un point central, les points centraux des dents respectivement voisines ayant un espacement prédéfini, un rayon de disque de rotation qui dépend du point de vue fonctionnel de l'angle de rotation et d'un rayon moyen, ainsi qu'une courbe de contact de disque rotatif qui en résulte, le rayon moyen étant choisi de telle sorte qu'une longueur d'arc périphérique de la courbe de contact du disque rotatif est égale au produit de l'espacement prédéfini des points centraux des dents voisines par le nombre de dents, **caractérisé en ce que** le rayon de disque rotatif peut être exprimé par un développement harmonique sous la forme suivante :

$$r(t) = r_{moyen} + \sum_t \delta ri \, cos(nit + \varphi i)$$

où :

r$_{moyen}$ = le rayon moyen,
δri = une amplitude d'ovalisation,
ni = le nombre de bossages,
φi = une phase et
t = un paramètre courant issu d'un intervalle de 0 à 2π.

2. Disque rotatif selon la revendication 1, les dents étant alignées de telle sorte que leurs lignes centrales respectives soient perpendiculaires à la tangente de la courbe de contact de disque rotatif appliquée sur le point central correspondant des dents.

3. Disque rotatif selon l'une des revendications précédentes, avec lequel un arc de contact formé par un moyen de traction qui entoure au moins partiellement le disque rotatif suit toujours la courbe de contact du disque rotatif.

4. Disque rotatif selon l'une des revendications précédentes, avec lequel la courbe de contact du disque rotatif présente toujours une courbure non négative.

5. Procédé pour concevoir au moins un disque rotatif pouvant tourner selon un angle de rotation autour d'un axe de rotation, l'au moins un disque rotatif comprenant un contour de disque rotatif qui présente au moins un bossage, un nombre donné de dents disposées sur le contour du disque rotatif et ayant des points centraux, les points centraux des dents respectivement voisines ayant un espacement prédéfini, un rayon de disque de rotation qui dépend du point de vue fonctionnel de l'angle de rotation et d'un rayon moyen, ainsi qu'une courbe de contact de disque rotatif qui en résulte, le rayon moyen étant déterminé de telle sorte qu'une longueur d'arc périphérique de la courbe de contact du disque rotatif est égale au produit de l'espacement prédéfini des points centraux des dents voisines par le nombre de dents, **caractérisé en ce que** le rayon de disque rotatif est déterminé par un développement harmonique sous la forme suivante :

$$r(t) = r_{moyen} + \sum_{i} \delta ri \, cos(nit + \varphi i)$$

où :

r$_{moyen}$ = le rayon moyen,
δri = une amplitude d'ovalisation,
ni = le nombre de bossages,
φi = une phase et
t = un paramètre courant issu d'un intervalle de 0 à 2π.

6. Procédé selon la revendication 6, les dents étant alignées de telle sorte que leurs lignes centrales respectives soient perpendiculaires à la tangente de la courbe de contact de disque rotatif appliquée sur le point central correspondant des dents.

7. Procédé selon la revendication 5 ou 6, avec lequel le contour de disque rotatif est choisi de telle sorte que la courbe de contact du disque rotatif qui en résulte présente toujours une courbure non négative.

8. Produit pour mettre en oeuvre le procédé selon l'une des revendications 5 à 7, le produit étant un programme informatique avec un code de programme qui, lorsque le programme informatique est exécuté sur un ordinateur, convient pour mettre en oeuvre un procédé selon l'une des revendications 5 à 7.

9. Programme informatique selon la revendication 8, lequel est enregistré sur un support lisible par ordinateur.

10. Support de données lisible par ordinateur sur lequel est enregistré un programme informatique, lequel comprend un code de programme qui, lorsque le programme informatique est exécuté sur un ordinateur, convient pour mettre en oeuvre un procédé selon l'une des revendications 5 à 7.

11. Système informatique doté d'un support de mémorisation dans lequel est enregistré un programme informatique avec un code de programme qui, lorsque le programme informatique est exécuté sur un ordinateur, convient pour mettre en oeuvre un procédé selon l'une des revendications 5 à 7.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19520508 A
- DE 20319172

- DE 2303453 A1